(19) Europäisches Patentamt
European Patent Office
Office européen des brevets

(11) **EP 3 337 220 B1**

(12) **EUROPEAN PATENT SPECIFICATION**

(45) Date of publication and mention of the grant of the patent:
**24.07.2019 Bulletin 2019/30**

(51) Int Cl.:
*H04W 24/02* (2009.01)    *H04W 88/08* (2009.01)

(21) Application number: **16290235.7**

(22) Date of filing: **15.12.2016**

(54) **A SYSTEM FOR EVALUATING PERFORMANCE OF A WIRELESS ACCESS POINT**

**SYSTEM ZUR AUSWERTUNG DER LEISTUNG EINES DRAHTLOSEN ZUGANGSPUNKTS**

**SYSTÈME D'ÉVALUATION DE LA PERFORMANCE D'UN POINT D'ACCÈS SANS FIL**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.06.2018 Bulletin 2018/25**

(73) Proprietor: **Alcatel Lucent**
**91620 Nozay (FR)**

(72) Inventors:
• **Atawia, Ramy**
**2018 Antwerpen (BE)**

• **Gacanin, Haris**
**2018 Antwerpen (BE)**

(74) Representative: **IP HILLS NV**
**Hubert Frère-Orbanlaan 329**
**9000 Gent (BE)**

(56) References cited:
**EP-A1- 2 852 204          EP-A2- 2 947 910**
**US-A1- 2010 165 958**

## Description

### Technical Field

The present invention relates to the field of home network diagnostic and troubleshooting. More particularly, the present invention relates to the field of performance evaluation of managed wireless access points.

### Background

The evaluation of the performance of managed wireless access points in a home network typically relies on the analysis of both the throughput of all associated users of the home network and of their requested demands.

Typically, in-field speed test measurements are performed by the users or by the operator. Such measurements are described in the scientific publication of A. Vlavianos et al. entitled "Assessing link quality in IEEE 802.11 wireless networks: what is the right metric?" published in the proceedings of the IEEE PIMCR in December 2008, and in the scientific publication of K. H. Kim et al. entitled "WiSlow: a Wi-Fi network performance troubleshooting tool for end users" published in the proceedings of the IEEE INFOCOM in July 2008.

Although speed test measurements can be done by one or more mobile applications, the manual evaluation of the performance of wireless access points is a burden for both the user and the operator. Indeed, in order to capture different network conditions, in-field speed test measurements must be performed at anticipated locations of users and over long time durations. Additionally, in-field speed test measurements do not account for the application demands of the users and only focus on the physical values that have a direct impact on the throughput, such as for example the received signal strength indication referred to as RSSI and the signal-to-interference-plus-noise ratio referred to as the SINR. In case of high throughput although the demand is higher, focusing on the physical values might result in the indication a false good performance of the access point. On the other hand, a false bad performance might be obtained when the measurements indicate that the throughput is not high although it is sufficient for the low traffic demand.

Figure 1 of the patent application illustrates such examples. The graph labelled 201 illustrates the SINR labelled 205 in dB for three wireless access points labelled 206. A first access point has 2 users, for example 2 STAs, a second access point has 3 users, for example 3 STAs, and a third access point has 3 users, for example 3 STAs. The graph labelled 202 illustrates the throughput labelled 208 in Mbps of to each user of the three access points corresponding to the three wireless access points of the graph labelled 201. The measurements of the graphs labelled 201 and 202 were performed for a low traffic load of 2Mbps. If for example the SINR labelled 205 in the graph labelled 201 must be higher than a threshold labelled 209 equal to 50dB to be acceptable for a load of 2Mbps, only one user of the second wireless access point and two users of the third access point demonstrate a SINR larger than 50dB on the graph labelled 201. However, when looking at the throughput of the wireless access points, all the eight users demonstrate a throughput equal to 2Mbps, i.e. all the users demonstrate a throughput which is high enough to cover the traffic load, i.e. a throughput which is enough to satisfy the demand. Focusing on the SINR would in this case therefore result in the indication of a false bad performance while the throughput is high enough to cover the demand. Alternatively, the graph labelled 203 illustrates the RSSI labelled 207 in dB for three wireless access points labelled 206. A first access point has 2 users, for example 2 STAs, a second access point has 3 users, for example 3 STAs, and a third access point has 3 users, for example 3 STAs. The graph labelled 204 illustrates the throughput labelled 208 in Mbps of to each user of the three access points corresponding to the three wireless access points of the graph labelled 203. The measurements of the graphs labelled 203 and 204 were performed for a high traffic load of 5Mbps. If for example the RSSI in the graph labelled 203 must be larger than a threshold labelled 210 equal to -60dB to be acceptable for a load of 5Mbps, two out of the eight users demonstrate a RSSI lower than -60dB on the graph labelled 203. However, when looking at the throughput of the wireless access points, some users which demonstrate a RSSI larger than -60dB demonstrate a throughput lower that 5Mbps, i.e. a throughput which is not high enough to cover the demand. Focusing on the RSSI would in this case therefore result in the indication of a false good performance while the throughput is not high enough to cover the demand. Similarly, some users which demonstrate on the graph labelled 203 a RSSI smaller than -60dB demonstrate a throughout equal to 5Mbps, i.e. a throughput which is enough to cover the demand. Focusing on the RSSI would in this case therefore result in the indication of a false bad performance while the throughput is high enough to cover the demand.

The patent application EP 2 947 910 A2 discloses that a performance of an access point in a wireless network is optimized based on a statistical ranking of independent variables. A device analyzer may calculate a dependent variable for the performance of the access point and independent variables that impact the dependent variable from a set of independent variables based on real-time access point data received from a plurality of access points. A predictive modeler may generate a model to forecast the performance of the access point and to determine an impact ranking for the independent variables from the dependent and independent variables. The impact ranking may sequence the independent variables according to their impact on the dependent variable. Accordingly, a configuration circuit may adjust a controllable parameter of the access points according to the impact ranking.

# EP 3 337 220 B1

## Summary of the Invention

It is an objective to disclose a system and the related method that overcome the above identified shortcomings of existing solutions. More particularly, it is an objective to disclose a system which assesses performance of a wireless access point without relying on measurements collected by a user or an operator, i.e. without user contribution, in a fast and efficient manner. Additionally, it is an objective to disclose a system which avoids unnecessary troubleshooting for wireless access points.

According to a first aspect of the present invention, the above defined objectives are realized by a system for evaluating performance of a wireless access point in a network, the system comprising:

- a simulated score determining unit configured to determine relation functions for a simulated wireless access point similar to the wireless access point, the relation functions modelling a mathematical relation between simulation access point parameters of the simulated wireless access point and a ratio of a simulated throughput delivered by the simulated wireless access point to a simulated application rate demanded by a user of the simulated wireless access point;
- an access point parameters collecting unit adapted to remotely determine access point parameters of the wireless access point in the network; and
- a performance determining engine configured to apply the relation functions to determine from the access point parameters a wireless score representative of the performance of the wireless access point, the wireless score corresponding to a ratio of a throughput delivered by the wireless access point to an application rate demanded by a user of the wireless access point.

The system according to the present invention efficiently assesses the performance of a wireless access point of a network as a function of both throughput and demand and without requiring the contribution of a user of the wireless access point. Indeed, the system according to the present invention evaluates the performance quality of a wireless access point as a ratio between throughput and demand determined from remotely accessible access point parameters. Additionally, evaluating the wireless score of the present invention allows the system to accurately detect if a wireless access point suffers from poor performance and if troubleshooting by an operator of the network is required. This saves times and effort when assessing the performance of a wireless access point compared to system which relies on network measurements performed by a user of the wireless access point and/or an operator of the network. The system according to the present invention further prevents unnecessary troubleshooting for wireless access points which demonstrate poor measurements although the demand of users of the wireless access points are satisfied. Finally, the system according to the present invention can be used for proactive optimization of the performance of a wireless access point prior to complaints of a user of the wireless access point.

A user of a wireless access point is understood as a physical person using the wireless access point. Alternatively, a user of a wireless access point is understood as a user device demanding an application rate to the wireless access point.

According to an optional aspect of the invention, the access point parameters collecting unit comprises:

- a queue length determining module adapted to determine a queue length corresponding to a number of non-transmitted data packets available at the wireless access point;
- a retransmission determining module adapted to determine a retransmission amount corresponding to a ratio of a number of retransmitted data packets by the wireless access point within a predefined time interval to a number of data packets sent by the wireless access point within the predefined time interval;
- a channel utilization evaluating unit adapted to determine a contention ratio corresponding to a busy time fraction of the predefined time interval during which the wireless access point senses a channel as busy;
- a channel activity evaluating unit adapted to determine an activity level corresponding to a time fraction of the predefined time interval during which the wireless access point transmits data packets.

The satisfaction of a user of an access point is expressed as a function of both the delivered throughput and the demanded application rate. The wireless score corresponds to a ratio of a throughput delivered by the wireless access point to an application rate demanded by a user of the wireless access point and the wireless score therefore quantifies the performance of the access point and the degree of satisfaction of user of the wireless access point with the delivered wireless service. The wireless score is determined from remotely reported metric values such as the queue length, the retransmission amount, the contention ratio and the activity level. The throughput delivered by the wireless access point depends on two main factors: the contention at the wireless access point and the interference or collision at the side of the user. These two factors can be determined from respectively the contention ratio and the retransmission amount which are both remotely available to the operator. The application rate demanded by a user of the wireless access point can be estimated from the queue length of each access category and the number of transmitted or received bytes and the transmitted or received rates.

The queue length of each access category indicates the amount of data packets available at the wireless access point and waiting for transmission to the users once the channel is sensed idle. Small queue indicates either low traffic and/or low contention, while larger queue indicates high traffic and/or high contention. In case of collisions, however, the queue length might be small due to the dropped data packets after exceeding the limit of the retransmission amount. Thus, combining the queue length with the retransmission amount will lead to an indicative quality metric for the overall performance of the wireless access point, i.e. a ratio of the throughput delivered by the wireless access point to the application rate demanded by a user of the wireless access point. Therein, the score has a high value near 1 when both the retransmission amount and the queue length are low, and the score has a low value near 0 when one of the retransmission amount or the queue length has a high value.

The buffer queue of each access category depends on the application transmission rate, i.e. back-haul and application server. This might lead to misleading low scores when the buffer length is high due to the high transmission from the application server to the wireless access point, for example as in video streaming or file download applications. In this case, we have to rely on other parameters to model the contention and the activity level of the wireless access point, in particular on the contention ratio and the activity level. The contention ratio is calculated as the percentage of time, over a certain duration, in which the channel is sensed busy by the wireless access point controlled channel access. The contention ratio therefore models the contention at the wireless access point whole low value indicates a higher chance for occupying the medium. The activity level indicates the time fraction used by the wireless access point to serve its users and the activity level is measured as a function of the transmission rate and a reception rate of the wireless access point, a channel bandwidth at the wireless access point and a RTS-CTS configuration standing for Request To Send-Clear To Send at the wireless access point and a total number of transmitted bytes and a total number of received bytes at the wireless access point. The transmission rate and a reception rate as well as the channel bandwidth at the wireless access point and a RTS-CTS configuration are used to roughly estimate the throughput of the wireless access point and are then combined with the total number of transmitted bytes and a total number of received bytes at the wireless access point to calculate the activity level of the wireless access point. The activity level in essence models the amount of traffic over demand at the wireless access point and thus combining it with the contention ratio indicates whether the wireless access point is able to satisfy all the users or not.

The retransmission determining module determines a retransmission amount corresponding to a ratio of a number of retransmitted data packets by the wireless access point within a predefined time interval to a number of data packets sent by the wireless access point within the predefined time interval. The retransmission amount is defined in the IEEE 802.11 standard described in the IEEE publication entitled "Wireless LAN Medium Access Control (MAC) and Physical Layer (PHY) Specifications" published in 2012 and reported in the TR181 available at this URL: https://www.broadband-forum.org/cwmp/tr-181-2-9-0.html# for each access point of the network. The retransmission amount is determined using equation (1) defined as R:

$$R = \frac{sum(Device.WiFi.SSID.\{i\}.Stats.Restrans.Count)}{sum(Device.Wifi.SSID.\{i\}.Stats.PacketsSent)} \quad (1)$$

The channel utilization evaluating unit determines a contention ratio corresponding to a busy time fraction of the predefined time interval during which the wireless access point senses a channel as busy. The contention ratio is defined in the IEEE 802.11 standard described in the IEEE publication entitled "Wireless LAN Medium Access Control (MAC) and Physical Layer (PHY) Specifications" published in 2012. The contention ratio is determined using equation (2) defined as U:

$$U = \frac{channel\ busy\ time}{dot11ChannelUtilizationBeaconIntervals * dot11BeaconPeriod * 1024} \quad (2)$$

Alternatively, network counters such as CCA Busy Fraction can be also used to calculate the contention ratio through the following two parameters:

Device.WiFi.Radio.{i}.CCARequest
Device.WiFi.Radio.{i}.CCAReport

According to an optional aspect of the invention, the queue length determining module is adapted to determine the queue length by calculating an average of access category queue lengths of each access category, wherein the each access category corresponds to a class of traffic.

This way, the queue length determining module determines the queue length using the histogram of the queue of each access category that is available in the IEEE 802.11 standard described in the IEEE publication entitled "Wireless LAN Medium Access Control (MAC) and Physical Layer (PHY) Specifications" published in 2012 and reported in the TR181 available at this URL: https://www.broadband-forum.org/cwmp/tr-181-2-9-0.html#. The queue length is determined using equation (3) defined as Q:

$$Q = mean\ (sum(H_v[l] \odot H_i[l]/(sum(H_v[l]))/(t * argmax(H_i)) \tag{3}$$

wherein:

$H_i$ = *Device.WiFi.Access.Point.{i}.AC{l}.OutQLenHistogramIntervals*
$H_v$ = *Device.WiFi.Access.Point.{i}.AC{l}.Stats.OutQLenHistogram*
t = *Device.WiFi.Access.Point,{i}.AC{l}.OutQLenHistogramSampleInterval*

$\odot$ is the dot product between the histogram intervals $H_i$ and their values $H_v$ in order to calculate the average queue size of each access category AC *l*.

According to an optional aspect of the invention, the activity level corresponds to a combination of:

- a transmission rate and a reception rate of the wireless access point;
- a channel bandwidth at the wireless access point and a RTS-CTS configuration at the wireless access point; and
- a total number of transmitted bytes and a total number of received bytes at the wireless access point.

The channel activity evaluating unit determines an activity level corresponding to a time fraction of the predefined time interval during which the wireless access point transmits data packets. The activity level is calculated as function of the following counters to estimate the fraction of time the wireless access point is serving users of the network and is determined using equation (4) defined as A:

$$A = \frac{sum\left(\frac{B_D[j]}{R'_D[j]}\right) + sum\left(\frac{B_U[j]}{R'_U[j]}\right)}{t} \tag{4}$$

wherein:

$R_D[j]$ = *Device.WiFi.Access.Point.{i}.AssociatedDevice.{j}.LastDataDownlinkRate*
$R_U[j]$ = *Device.WiFi.Access.Point.{i}.AssociatedDevice.{j}.LastDataUplinkRate*
$B_D[j]$ = *Device.WiFi.Access.Point.{i}.AssociatedDevice.{j}.Stats.BytesSent*
$B_U[j]$ = *Device.WiFi.Access.Point.{i}.AssociatedDevice.{j}.Stats.BytesReceived*
t is the predefined time interval

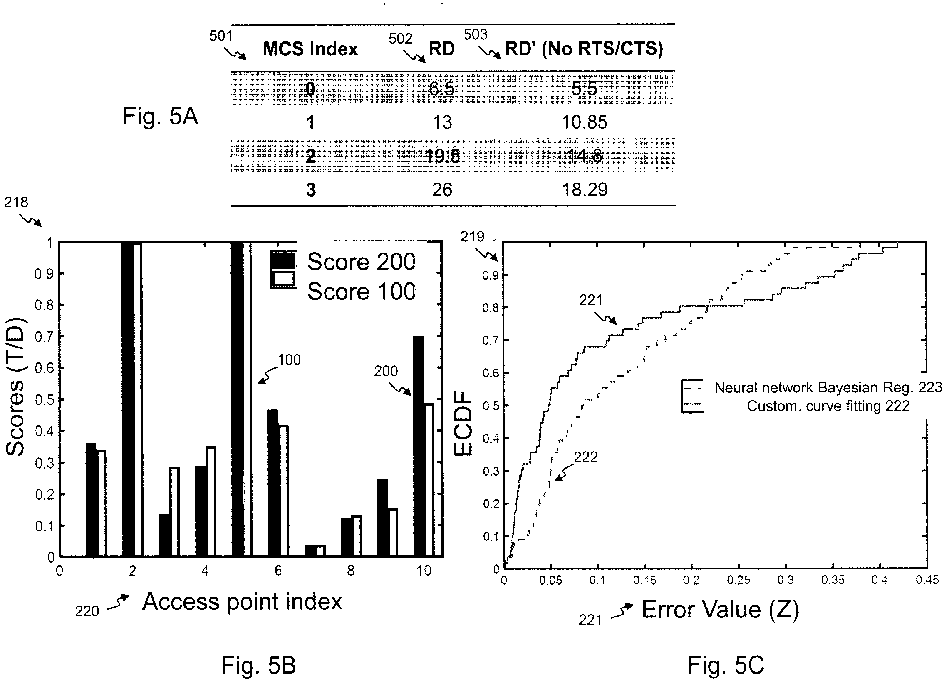

E is the parameter used to map the reported theoretical data rates $R_D$ and $R_U$ to the practical values rates $R'_D$ and $R'_U$ that are lower due to the overheads such as for example acknowledgements and Inter Frame Spacing referred to as IFS and to the network configuration such as for example whether Request To Send referred to as RTS or Clear To Send referred to as CTS is enabled. Using measurements or standard compliant simulators, a mapping of the maximum theoretical transmission rates to their practical throughputs can be tabled. Table I of Fig. 5A depicts an example of such a mapping with a correspondence between a Modulation and Coding Scheme referred to as MCS index value in column 501, the theoretical data rate in column 502 and the practical data rate in column 503.

When a user of the wireless access point gets lower rates than $R'_D$, for example due to data packet collisions, this will result in higher retransmissions that will implicitly increase the $B_U[j]$ and the ratio of equation (4) will remain an indicator of the activity level of the wireless access point.

According to an optional aspect of the invention, the simulated score determining unit is further configured to:

- determine simulation access point parameters from simulated scenarios or from collected measurements in the network;
- simulate a plurality of combinations of said simulation access point parameters;
- determine a throughput for each combination of said simulation access point parameters;
- use machine learning to determine a mathematical relation between the simulation access point parameters and the throughput delivered by the simulated wireless access point, thereby determining the relation functions.

The simulation access point parameters comprise a queue length, a retransmission amount, a contention ratio and an activity level of the simulated wireless access point. This way, during a learning phase, the simulated score determining unit determines the simulation access point parameters from simulated scenarios or collected measurements with known application rates demanded by a user and the simulated score determining unit measures offline the throughput at different combinations of input simulation access point parameters. The simulated score determining unit relies on a general scenario that can be simulated offline to illustrate a wide range of mathematical relations between the simulation access point parameters and a ratio of the throughput to the application rate, i.e. a wide range of relation functions. The general scenario simulates a wide range of traffic loads and wireless access point-user distances in order to model the mathematical relations in a single wireless access point scenario. Additionally, the general scenario considers contention problems and hidden node problems between multiple wireless access points in order to consider wider range of utilization and retransmissions, respectively. In other words, the system of the present invention uses a standard compliant network simulator to simulate the general scenario. From the simulator, six main parameters are exported: the four input access point parameters and the simulated score corresponding to a ratio of a simulated throughput delivered by the simulated wireless access point to a simulated application rate demanded by a user of the simulated wireless access point. The general scenario simulates the two key problems in the Wi-Fi that affect the user satisfaction. These two problems are contention and hidden node between multiple wireless access points. By changing the locations of users of the wireless access point and/or by changing their demanded application rates, relation functions over a large range of input access point parameters can be determined and applied by the performance determining engine to determine the wireless score.

According to an optional aspect of the invention, the relation functions comprise trained neural networks and the performance determining engine comprises one or more neural networks configured to determine the wireless score by applying the trained neural networks.

According to an optional aspect of the invention, the relation functions comprise a first intermediate stepwise fitting function and a second intermediate stepwise fitting function and the performance determining engine is configured to determine the wireless score by applying the first intermediate stepwise fitting function and the second intermediate stepwise fitting function.

Either neural networks are used to determine the wireless score or customized curve fitting is applied to determine the wireless score. Neural networks are preferred when training data is available at the side of an operator of the network. Otherwise, derived curve fitting can be used to determine the wireless score. An example of a neural network as understood in the present invention is for example the one reference for general implementation described in the publication "An Introduction to Neural Networks" by James A. Anderson published in March 1995. Alternatively, the performance determining engine comprises any supervised learning technique to determine the wireless score.

According to an optional aspect of the invention, the performance determining engine is further configured to:

- apply said first intermediate stepwise fitting function as a function of the access point parameters such that a first intermediate wireless score is determined from the first intermediate stepwise fitting function and is equal to:

  o a maximum ratio of the throughput to the application rate when the retransmission amount is lower than a first predefined threshold and a sum of the activity level and the contention ratio is lower than a second predefined threshold; or
  
  o when the retransmission amount is larger than a first predefined threshold and the sum of the activity level and the contention ratio is comprised between a third predefined threshold and a fourth predefined threshold, a product of a first coefficient and a second coefficient at power the sum of the activity level and the contention ratio, wherein the first coefficient and the second coefficient are calculated such that a mean square error between the simulated score and the first intermediate wireless score is minimized;

- apply said second intermediate stepwise fitting function as a function of the access point parameters such that a second intermediate wireless score is determined from the second intermediate stepwise fitting function and is equal to a ratio of an exponential of a product of the opposite of a third coefficient and the queue length to a difference between a fourth coefficient and the retransmission amount, wherein the third coefficient and the fourth coefficient are calculated such that a mean square error between the simulated score and the second intermediate wireless score is minimized;

and wherein the performance determining engine is further configured to determine the wireless score as equal to:

- a maximum ratio of the throughput to the application rate when the retransmission amount is lower than a first predefined threshold and the sum of the activity level and the contention ratio is lower than a second predefined threshold; or
- when the retransmission amount is larger than a first predefined threshold and the sum of the activity level and the contention ratio is comprised between a third predefined threshold and a fourth predefined threshold, a maximum between the second intermediate wireless score and the product of the first coefficient and the second coefficient at power the sum of the activity level and the contention ratio; or
- the second intermediate wireless score.

This way, the wireless score is a combination of two intermediate wireless scores. The first intermediate wireless score is based on the contention ratio, the activity level and the retransmission amount labelled R of equation (1). A sum labelled C of the activity level A of equation (4) and the contention ratio U of equation (2) is defined and the first intermediate wireless score labelled $S_1$ is obtained as follows in equation (5):

$$S_1 = \begin{cases} 1 & if\ (R < 1\text{st PT AND } C < 2\text{nd PT}) \\ f_1(C) & if\ (R > 1st\ PT\ AND\ 3rd\ PT < C < 4th\ PT) \\ Undefined & Otherwise \end{cases} \tag{5}$$

wherein PT stands for predefined threshold and wherein the second option is calculated using the following function of equation (6) for the exponential increasing function in this region:

$$f_1(C) = x * y^C \tag{6}$$

wherein $x$ is the first coefficient and $y$ is the second coefficient.
The first coefficient $x$ and the second coefficient $y$ are calculated such that the mean square error between the simulated score from the learning phase and the first intermediate wireless score is minimized.
It can be noted that the first intermediate wireless score $S_1$ is insufficient due to the undefined values in a certain region where the first intermediate score decreases while none of the access point parameters are changing. This is avoided by the determination of a second intermediate wireless score $S_2$. A throughput over demand ratio is exponentially decreasing with the queue length labelled Q of equation (3) while the degree of decaying depends on the retransmission amount labelled R of equation (1). The second intermediate wireless score labelled $S_2$ is therefore obtained as follows in equation (7):

$$S_2 = f(R, Q) = e^{\frac{(-a*Q)}{b-R}} \tag{7}$$

wherein $a$ is the third coefficient and $b$ is the fourth coefficient.
The third coefficient $a$ and the fourth coefficient b are calculated such that the mean square error between the simulated score from the learning phase and the second intermediate wireless score is minimized.,
[0030] The wireless score is finally determined by defining a final scoring function which is a combination of the first intermediate wireless score and the second intermediate wireless score as follows in equation (8):

$$S = \begin{cases} 1 & if\ (R < 1\text{st PT AND } C < 2\text{nd PT}) \\ \max(f_1(C), S_2) & if\ (R > 1st\ PT\ AND\ 3rd\ PT < C < 4th\ PT) \\ S_2 & Otherwise \end{cases} \tag{8}$$

wherein PT stands for predefined threshold.
According to an optional aspect of the invention, the wireless score is comprised between 0 and 1.
This way, the first intermediate wireless score determined from the first intermediate stepwise fitting function is equal to 1 when the retransmission amount is lower than a first predefined threshold and a sum of the activity level and the contention ratio is lower than a second predefined threshold. Additionally, the wireless score is equal to 1 when the retransmission amount is lower than a first predefined threshold and the sum of the activity level and the contention ratio is lower than a second predefined threshold.

According to a second aspect of the invention, there is provided a method for evaluating performance of a wireless access point in a network, the method comprising the steps of:

- determining relation functions for a simulated wireless access point similar to the wireless access point, the relation functions modelling a mathematical relation between simulation access point parameters of the simulated wireless access point and a ratio of a simulated throughput delivered by the simulated wireless access point to a simulated application rate demanded by a user of the simulated wireless access point;
- remotely determining access point parameters of the wireless access point in the network; and
- applying the relation functions to determine from the access point parameters a wireless score representative of the performance of the wireless access point, the wireless score corresponding to a ratio of a throughput delivered by the wireless access point to an application rate demanded by a user of the wireless access point.

The method according to the present invention efficiently assesses the performance of a wireless access point of a network as a function of both throughput and demand and without requiring the contribution of a user of the wireless access point. Indeed, the method according to the present invention evaluates the performance quality of a wireless access point as a ratio between throughput and demand determined from remotely accessible access point parameters. Additionally, evaluating the wireless score of the present invention allows to accurately detect if a wireless access point suffers from poor performance and if troubleshooting by an operator of the network is required. This saves times and effort when assessing the performance of a wireless access point compared to system which relies on network measurements performed by a user of the wireless access point and/or an operator of the network. The method according to the present invention further prevents unnecessary troubleshooting for wireless access points which demonstrate poor measurements although the demand of users of the wireless access points are satisfied. Finally, the method according to the present invention can be used for proactive optimization of the performance of a wireless access point prior to complaints of a user of the wireless access point.

The current invention in addition also relates to a computer program comprising software code adapted to perform the method according to the present invention.

The invention further relates to a computer readable storage medium comprising the computer program according to the present invention.

## Brief Description of the Drawings

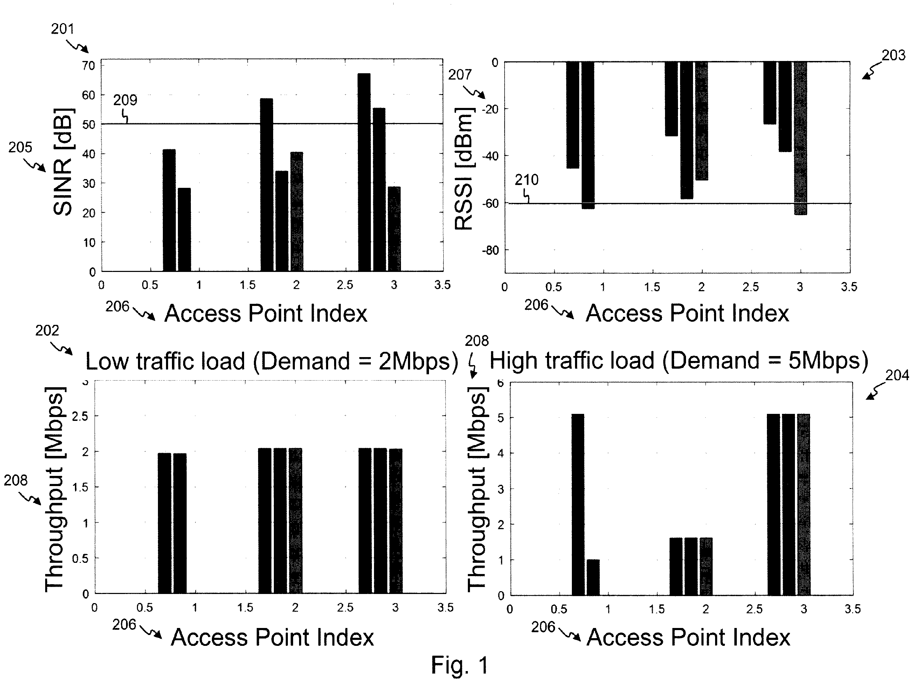

Fig. 1 schematically illustrates the limitations of existing measurement and non-demand based access point evaluating techniques.

Fig. 2 schematically illustrates an embodiment of a system according to the present invention.

Figs. 3A-3C schematically illustrates an embodiment of the relation between a wireless access point quality metric and both the retransmission amount and the queue length.

Figs. 4A-4C schematically illustrates an embodiment of a use of the contention ratio and the activity level of a wireless access point to model the wireless access point quality score.

Fig. 5A schematically illustrates an embodiment of a mapping of maximum theoretical transmission rates to their practical throughputs. Fig. 5B schematically illustrates scores for a home scenario comprising 10 wireless access points using custom curve fitting. Fig. 5C schematically illustrates the distribution of absolute mean error for the calculated score for a home scenario comprising 30 wireless access points using neural networks and custom curve fitting.

Fig. 6 schematically illustrates an embodiment of a general scenario used for training in the learning phase.

Fig. 7 schematically illustrates an embodiment of the steps of the method according to the present invention.

Fig. 8 schematically illustrates a suitable computing system for hosting the system of Fig. 2.

## Detailed Description of Embodiment(s)

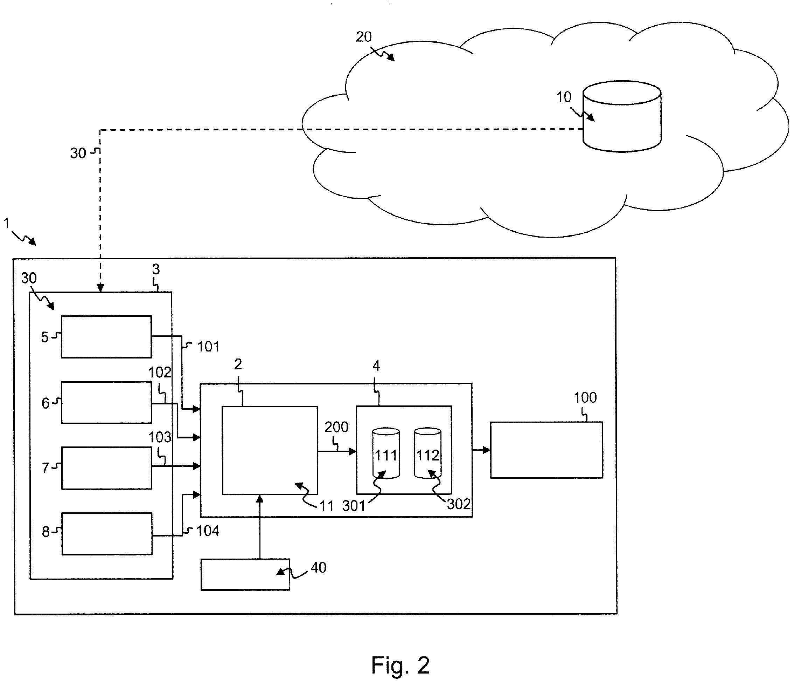

According to an embodiment shown in Fig. 2, a system 1 for evaluating performance of a wireless access point 10 in a network 20 comprises a simulated score determining unit 2, an access point parameters - collecting unit 3 and a performance determining engine 4. The simulated score determining unit 2 determines relation functions 200 for a simulated wireless access point 11 similar to the wireless access point 10, wherein the relation functions 200 correspond to a ratio of a simulated throughput delivered by the simulated wireless access point 11 to a simulated application rate demanded by a user of the simulated wireless access point 11. The simulated score determining unit 2 determines a plurality of simulation access point parameters 31 from simulated scenarios or from collected measurements 40 in the network 20. The simulated score determining unit 2 simulates a plurality of combinations of the simulation access point parameters 31, determines a throughput for each combination and uses machine learning to determine a mathematical relation between the simulation access point parameters 31 and the throughput delivered by the simulated wireless access point 11, thereby determining relation functions 200 representative for a mathematical relation between the simulation access point parameters 31 and a ratio of the throughput to the application rate. The access point parameters collecting unit 3 determines a plurality of access point parameters of the wireless access point 10 in the network 20. The performance determining engine 4 uses the relation functions 200 to determine from the access point parameters 30 a wireless score 100 representative of the performance of the wireless access point 10. The wireless score 100 corresponds to a ratio of a throughput delivered by the wireless access point 10 to an application rate demanded by a user of the wireless access point 10. The access point parameters collecting unit 3 comprises a queue length determining module 5, a retransmission determining module 6, a channel utilization evaluating unit 7 and a channel activity evaluating unit 8. The queue length determining module 5 determines a queue length 101 corresponding to a number of non-transmitted data packets available at the wireless access point 10. The queue length 101 is determined by calculating an average of access category queue lengths of each access category, wherein each access category corresponds to a class of traffic. The retransmission determining module 6 determines a retransmission amount 102 corresponding to a ratio of a number of retransmitted data packets by the wireless access point 10 within a predefined time interval to a number of data packets sent by the wireless access point 10 within the predefined time interval. The channel utilization evaluating unit 7 determines a contention ratio 103 corresponding to a busy time fraction of the predefined time interval during which the wireless access point 10 senses a channel as busy. The channel activity evaluating unit 7 determines an activity level 104 corresponding to a time fraction of the predefined time interval during which the wireless access point 10 transmits data packets. The activity level 104 corresponds to a combination of a transmission rate and a reception rate of the wireless access point 10, a channel bandwidth at the wireless access point 10 and a RTS-CTS configuration at the wireless access point 10 and a total number of transmitted bytes and a total number of received bytes at the wireless access point 10. The relation functions 200 comprise one or more trained neural networks. The performance determining engine 4 comprises one or more neural networks that determine the wireless score 100 by applying the trained neural networks. According to an alternative embodiment, the relation functions 200 comprise a first intermediate stepwise fitting function 301 and a second intermediate stepwise fitting function 302. The performance determining engine 4 then determines the wireless score 100 by applying the first intermediate stepwise fitting function 301 and the second intermediate stepwise fitting function 302. The wireless score 100 is comprised between 0 and 1, which makes it easy and fast to understand. The performance determining engine 4:

- applies the first intermediate stepwise fitting function 301 as a function of the access point parameters 30 such that a first intermediate wireless score 111 is determined from the first intermediate stepwise fitting function 301 and is equal to:

  ◦ a maximum ratio of a throughput to application rate, for example 1, when the retransmission amount 102 is lower than a first predefined threshold and a sum of the activity level 104 and the contention ratio 103 is lower than a second predefined threshold; or
  ◦ when the retransmission amount 102 is larger than a first predefined threshold and the sum of the activity level 104 and the contention ratio 103 is comprised between a third predefined threshold and a fourth predefined threshold, a product of a first coefficient and a second coefficient at power the sum of the activity level 104 and the contention ratio 103, wherein the first coefficient and the second coefficient are calculated such that a mean square error between the simulated score 200 and the first intermediate wireless score 111 is minimized;

- applies the second intermediate stepwise fitting function 302 as a function of the access point parameters 30 such that a second intermediate wireless score 112 is determined from the second intermediate stepwise fitting function 302 and is equal to a ratio of an exponential of a product of the opposite of a third coefficient and the queue length 101 to a difference between a fourth coefficient and the retransmission amount 102, wherein the third coefficient and the fourth coefficient are calculated such that a mean square error between the simulated score 200 and the second intermediate wireless score 112 is minimized; and determines the wireless score 100 as equal to:

- a maximum ratio of a throughput to application rate, for example 1, when the retransmission amount 102 is lower than a first predefined threshold and the sum of the activity level 104 and the contention ratio 103 is lower than a second predefined threshold; or
- when the retransmission amount 102 is larger than a first predefined threshold and the sum of the activity level 104 and the contention ratio 103 is comprised between a third predefined threshold and a fourth predefined threshold, a maximum between the second intermediate wireless score 112 and the product of the first coefficient and the second coefficient at power the sum of the activity level 104 and the contention ratio 103; or
- the second intermediate wireless score 112.

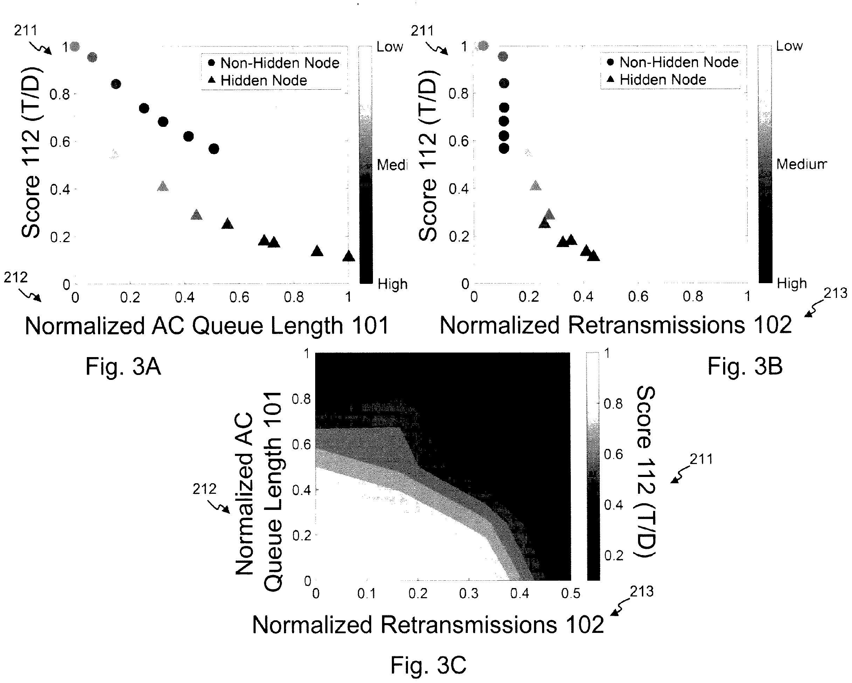

According to an embodiment shown in Figs. 3A-3C, Fig. 3A illustrates the second intermediate wireless score 112 labelled 211 as a function of the queue length 101 labelled 212 for hidden and non-hidden nodes. Fig. 3B illustrates the second intermediate wireless score 112 labelled 211 as a function of the retransmission amount 102 labelled 213 for hidden and non-hidden nodes. Fig. 3C illustrates relation between the second intermediate wireless score 112 labelled 211 and the queue length 101 and the retransmission amount 102 for hidden and non-hidden nodes. The queue length 101 of each access category indicates the amount of data packets available at the wireless access point and waiting for transmission to the users once the channel is sensed idle. Small queue indicates either low traffic and/or low contention, while larger queue indicates high traffic and/or high contention. In case of collisions, however, the queue length 101 might be small due to the dropped data packets after exceeding the limit of the retransmission amount 102. Thus, combining the queue length 101 with the retransmission amount 102 will lead to an indicative quality metric for the overall performance of the wireless access point as illustrated in Fig. 3C. Therein, the score 112 has a high value near 1 when both the retransmission amount 102 and the queue length 101 are low, and the score 112 has a low value near 0 when one of the retransmission amount 102 or the queue length 101 has a high value. From Fig. 3C, one can deduce that the score 112 is exponentially decreasing with the queue length 101 while the degree of decaying depends on the retransmission amount 102.

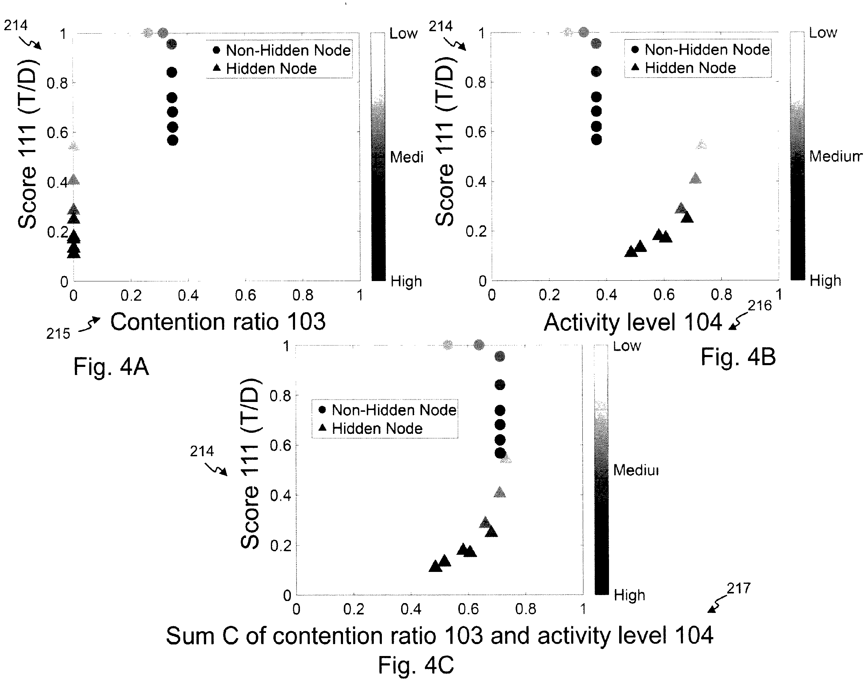

According to an embodiment shown in Figs. 4A-4C, Fig. 4A illustrates the first intermediate wireless score 111 labelled 214 as a function of the contention level 103 labelled 215 for hidden and non-hidden nodes. Fig. 4B illustrates the first intermediate wireless score 111 labelled 214 as a function of the activity level 104 labelled 216 for hidden and non-hidden nodes. Fig. 4C illustrates relation between the first intermediate wireless score 111 labelled 214 and sum of the contention level 103 and the activity level 104 labelled 217 for hidden and non-hidden nodes. The buffer queue of each access category depends on the application transmission rate, i.e. back-haul and application server. This might lead to misleading low scores when the buffer length is high due to the high transmission from the application server to the wireless access point, for example as in video streaming or file download applications. In this case, we have to rely on other parameters to model the contention and the activity level of the wireless access point, in particular on the contention ratio 103 and the activity level 104. The contention ratio 103 is calculated as the percentage of time, over a certain duration, in which the channel is sensed busy by the wireless access point controlled channel access. The contention ratio 103 therefore models the contention at the wireless access point whose low value indicates a higher chance for occupying the medium. The activity level 104 indicates the time fraction used by the wireless access point to serve its users arid the activity level 104 is measured as a function of the transmission rate and a reception rate of the wireless access point, a channel bandwidth at the wireless access point and a RTS-CTS configuration at the wireless access point and a total number of transmitted bytes and a total number of received bytes at the wireless access point. The transmission rate and a reception rate as well as the channel bandwidth at the wireless access point and a RTS-CTS configuration are used to roughly estimate the throughput of the wireless access point and are then combined with the total number of transmitted bytes and a total number of received bytes at the wireless access point to calculate the activity level 104 of the wireless access point. The activity level 104 in essence models the amount of traffic/demand at the wireless access point and thus combining it with the contention ratio 103 indicates whether the wireless access point is able to satisfy all the users of not.

According to the embodiments shown in Figs. 3A-3C and Figs. 4A-4C, the first intermediate wireless score 111 labelled 214 is equal to:

- 1 when the retransmission amount 102 is lower than 0.15 and a sum of the activity level 104 and the contention ratio 103 is lower than 0.6; or
- when the retransmission amount 102 is larger than 0.15 and the sum of the activity level 104 and the contention ratio 103 is comprised between 0.5 and 0.75, a product of a first coefficient and a second coefficient at power the sum of the activity level 104 and the contention ratio 103, wherein the first coefficient and the second coefficient are calculated such that a mean square error between the simulated score 200 and the first intermediate wireless score 111 is minimized.

The second intermediate wireless score 112 labelled 211 is equal to a ratio of an exponential of a product of the opposite of a third coefficient and the queue length 101 to a difference between a fourth coefficient and the retransmission amount 102, wherein the third coefficient and the fourth coefficient are calculated such that a mean square error between the simulated score 200 and the second intermediate wireless score 112 is minimized. The wireless score 100 is then equal to:

- 1 when the retransmission amount 102 is lower than 0.15 and the sum of the activity level 104 and the contention ratio 103 is lower than 0.6; or
- when the retransmission amount 102 is larger than 0.15 and the sum of the activity level 104 and the contention ratio 103 is comprised between 0.5 and 0.75, a maximum between the second intermediate wireless score 112 and the product of the first coefficient and the second coefficient at power the sum of the activity level 104 and the contention ratio 103; or
- the second intermediate wireless score 112.

According to an embodiment shown in Fig. 5A, the channel activity evaluating unit determines an activity level corresponding to a time fraction of the predefined time interval during which the wireless access point transmits data packets. The activity level is calculated as function of the following counters to estimate the fraction of time the wireless access point is serving users of the network and is determined using equation (4) defined as A:

$$A = \frac{sum\left(\frac{B_D[j]}{R'_D[j]}\right) + sum\left(\frac{B_U[j]}{R'_U[j]}\right)}{t} \qquad (4)$$

wherein:

$R_D[j]$ = *Device.WiFi.Access.Point.{i}.AssociatedDevice.{j}.LastDataDownlinkRate*
$R_U[j]$ = *Device.WiFi.Access.Point.{i}.AssociatedDevice.{j}.LastDataUplinkRate*
$B_D[j]$ = *Device.WiFi.Access.Point.{i}.AssociatedDevice.{j}.Stats.BytesSent*
$B_U[j]$ = *Device.WiFi.Access.Point.{i}.AssociatedDevice.{j}.Stats.BytesReceived*

E is the parameter used to map the reported theoretical data rates $R_D$ and $R_U$ to the practical values rates $R'_D$ and $R'_U$ that are lower due to the overheads such as for example acknowledgements and IFS and to the network configuration such as for example whether RTS or CTS is enabled. Using measurements or standard compliant simulators, a mapping of the maximum theoretical transmission rates to their practical throughputs can be tabled. Table I of Fig. 5A depicts an example of such a mapping with a correspondence between a Modulation and Coding Scheme (MCS) index value in column 501, the theoretical data rate in column 502 and the practical data rate in column 503. When a user of the wireless access point gets lower rates than $R'_D$, for example due to data packet collisions, this will result in higher retransmissions that will implicitly increase the $B_U[j]$ and the ratio of equation (4) will remain an indicator of the activity level of the wireless access point.

Fig. 5B compares simulated scores 200 labelled 218 and wireless scores 100 labelled 218 for a home network with 10 wireless access points labelled 220, each wireless access points labelled 220 comprising 2 users. The wireless score 100 of Fig. 5B is determined with customized curve fitting. Fig. 5B shows how accurate and reliable the determination of the wireless score 100 via remotely accessed access point parameters is. Fig. 5C depicts the empirical cumulative distribution function labelled 219 as a function of the absolute mean error Z labelled 221 for wireless scores for a home network with 30 wireless access points. The wireless score 100 of Fig. 5C is determined using neural networks in the curve labelled 223, more particularly neural network Bayesian regulation, and using customized curved fitting in the curve labelled 222.

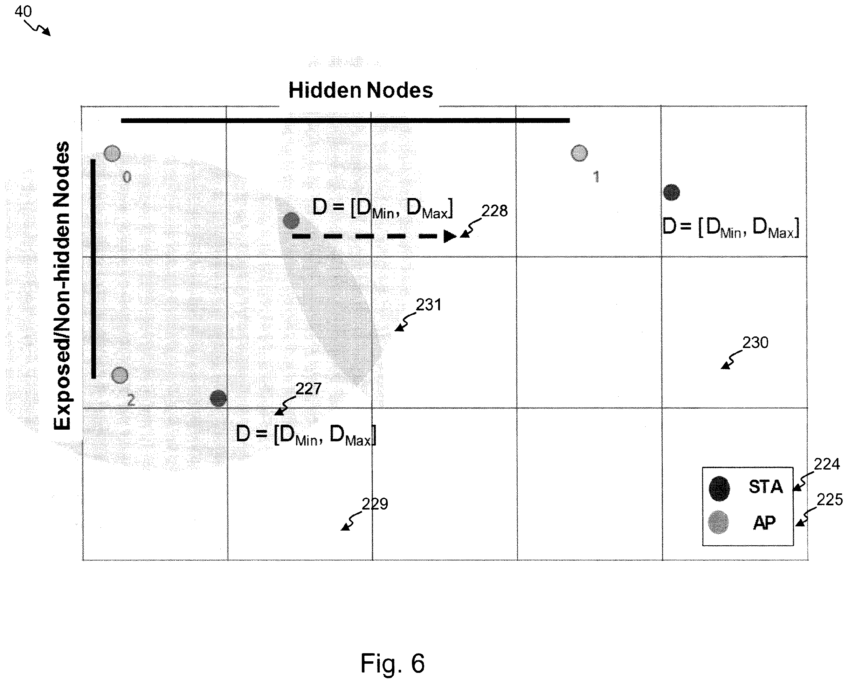

Fig. 6 schematically illustrates an embodiment of a general scenario 40 used for training in the learning phase. This general scenario simulates the two key problems in the Wi-Fi that affect the user satisfaction. These two problems are contention and hidden node between multiple access points. By changing the users location and/or their application rates, i.e. demand, a wide range of the input parameters, e.g. retransmission, activity, etc. can be achieved by the simulated users, and thus a wide range of output score can be observed. This scenario can be used by the simulated score determining unit to train the neural networks or derive the curve fitting relations. On Fig. 6, dots labelled 225 correspond to wireless access points indicated as the dots 0, 1 and 2, while dots labelled 226 correspond to user stations. The circle areas labelled 229, 230 and 231 schematically illustrate the wireless coverage region of the wireless access points labelled 225 in the network. The expression D labelled 227 correspond to the application rate of the respective user, wherein Dmin corresponds to a minimum application rate and Dmax corresponds to a maximum application rate. The arrow labelled 228 schematically indicates that the respective user of the dot labelled 224 moves in the network. A wide range of parameters, such as the application rate of the user, the distance from the user to a wireless access point, the position of the wireless access points in a network, etc. are therefore simulated in the general scenario.

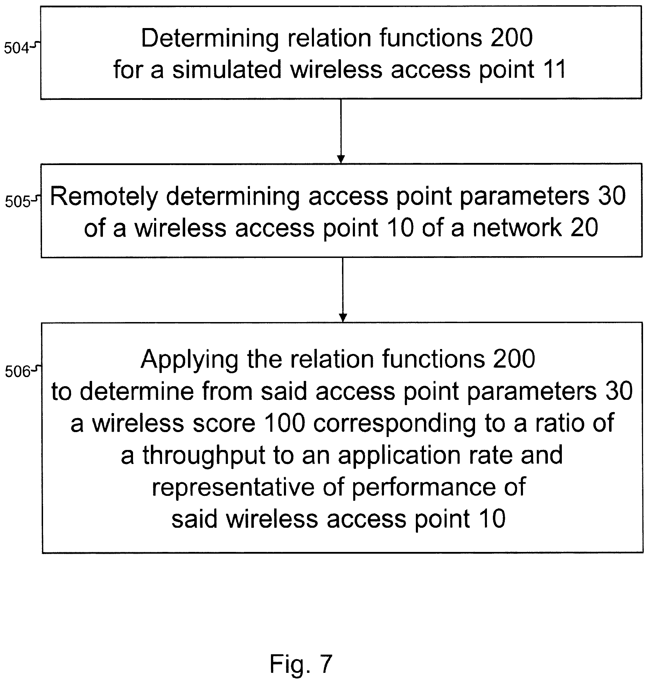

Fig. 7 schematically illustrates the steps of a method according to the present invention for evaluating performance of a wireless access point 10 in a network 20. In step 504, relation functions 200 are determined for a simulated wireless access point 11 similar to the wireless access point 10, the relation functions 200 modelling a mathematical relation between simulation access point parameters 31 of the simulated wireless access point 11 and a ratio of a simulated throughput delivered by the simulated wireless access point 11 to a simulated application rate demanded by a user of the simulated wireless access point 11. In consequent step 505, a plurality of access point parameters 30 of said wireless access point 10 in said network 20 are remotely determined. Finally, in step 506, the relation functions 200 are applied to determine from the access point parameters 30 a wireless score 100 representative of the performance of the wireless access point 10, the wireless score corresponding to a ratio of a throughput delivered by the wireless access point 10 to an application rate demanded by a user of the wireless access point 10.

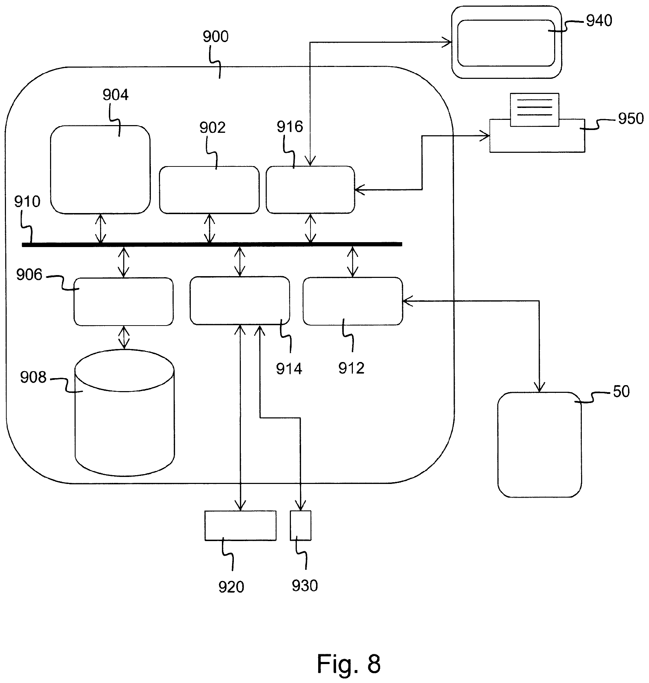

Fig. 8 shows a suitable computing system 800 for hosting the system 1 of Fig. 2. Computing system 900 may in general be formed as a suitable general purpose computer and comprise a bus 910, a processor 902, a local memory 904, one or more optional input interfaces 914, one or more optional output interfaces 916 a communication interface 912, a storage element interface 506 and one or more storage elements 908. Bus 910 may comprise one or more conductors that permit communication among the components of the computing system. Processor 902 may include any type of conventional processor or microprocessor that interprets and executes programming instructions. Local memory 904 may include a random access memory (RAM) or another type of dynamic storage device that stores information and instructions for execution by processor 902 and/or a read only memory (ROM) or another type of static storage device that stores static information and instructions for use by processor 904. Input interface 914 may comprise one or more conventional mechanisms that permit an operator to input information to the computing device 900, such as a keyboard 920, a mouse 930, a pen, voice recognition and/or biometric mechanisms, etc. Output interface 916 may comprise one or more conventional mechanisms that output information to the operator, such as a display 940, a printer 950, a speaker, etc. Communication interface 912 may comprise any transceiver-like mechanism such as for example two 1Gb Ethernet interfaces that enables computing system 900 to communicate with other devices and/or systems, for example mechanisms for communicating with one or more other computing systems 50. The communication interface 912 of computing system 900 may be connected to such another computing system by means of a local area network (LAN) or a wide area network (WAN, such as for example the internet, in which case the other computing system 980 may for example comprise a suitable web server. Storage element interface 906 may comprise a storage interface such as for example a Serial Advanced Technology Attachment (SATA) interface or a Small Computer System Interface (SCSI) for connecting bus 910 to one or more storage elements 908, such as one or more local disks, for example 1TB SATA disk drives, and control the reading and writing of data to and/or from these storage elements 908. Although the storage elements 908 above is described as a local disk, in general any other suitable computer-readable media such as a removable magnetic disk, optical storage media such as a CD or DVD, -ROM disk, solid state drives, flash memory cards, ... could be used. The system 900 described above can also run as a Virtual Machine above the physical hardware.

The system 1 of Fig. 2 can be implemented as programming instructions stored in local memory 904 of the computing system 900 for execution by its processor 902. Alternatively system 1 of Fig. 2 could be stored on the storage element 908 or be accessible from another computing system 50 through the communication interface 912.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s described or illustrated above.

**Claims**

1. A system (1) for evaluating performance of a wireless access point (10) in a network (20), said system (1) comprising:

   - a simulated score determining unit (2) configured to determine relation functions (200) for a simulated wireless access point (11) similar to said wireless access point (10), said relation functions (200) modelling a mathematical relation between simulation access point parameters (31) of said simulated wireless access point (11) and a ratio of a simulated throughput delivered by said simulated wireless access point (11) to a simulated application rate demanded by a user of said simulated wireless access point (11);
   - an access point parameters collecting unit (3) adapted to remotely determine access point parameters (30) of said wireless access point (10) in said network (20); and
   - a performance determining engine (4) configured to apply said relation functions (200) to determine from said access point parameters (30) a wireless score (100) representative of said performance of said wireless access point (10), said wireless score corresponding to a ratio of a throughput delivered by said wireless access point (10) to an application rate demanded by a user of said wireless access point (10).

2. A system (1) according to claim 1, wherein said access point parameters collecting unit (3) comprises:

   - a queue length determining module (5) adapted to determine a queue length (101) corresponding to a number of non-transmitted data packets available at said wireless access point (10);
   - a retransmission determining module (6) adapted to determine a retransmission amount (102) corresponding to a ratio of a number of retransmitted data packets by said wireless access point (10) within a predefined time interval to a number of data packets sent by said wireless access point (10) within said predefined time interval;
   - a channel utilization evaluating unit (7) adapted to determine a contention ratio (103) corresponding to a busy time fraction of said predefined time interval during which said wireless access point (10) senses a channel as busy; and
   - a channel activity evaluating unit (8) adapted to determine an activity level (104) corresponding to a time fraction of said predefined time interval during which said wireless access point (10) transmits data packets.

3. A system (1) according to claim 2, wherein said queue length determining module (5) is adapted to determine said queue length (101) by calculating an average of access category queue lengths of each access category, wherein said each access category corresponds to a class of traffic.

4. A system (1) according to claim 2, wherein said activity level (104) corresponds to a combination of:

   - a transmission rate and a reception rate of said wireless access point (10);
   - a channel bandwidth at said wireless access point (10) and a RTS-CTS configuration at said wireless access point (10); and
   - a total number of transmitted bytes and a total number of received bytes at said wireless access point (10).

5. A system (1) according to claim 2, wherein said simulated score determining unit (2) is further configured to:

   - determine simulation access point parameters (31) from simulated scenarios or from collected measurements in said network (20);
   - simulate a plurality of combinations of said simulation access point parameters (31);
   - determine a throughput for each combination of said simulation access point parameters (31);
   - use machine learning to determine a mathematical relation between said simulation access point parameters (31) and said throughput delivered by said simulated wireless access point (11), thereby determining said relation functions (200).

6. A system.(1) according to claim 1, wherein said relation functions (200) comprise trained neural networks and wherein said performance determining engine (4) comprises one or more neural networks configured to determine said wireless score (100) by applying said trained neural networks.

**7.** A system (1) according to claim 2 wherein relation functions (200) comprise a first intermediate stepwise fitting function (301) and a second intermediate stepwise fitting function (302) and wherein said performance determining engine (4) is configured to determine said wireless score (100) by applying said first intermediate stepwise fitting function (301) and said second intermediate stepwise fitting function (302).

**8.** A system (1) of claim 7 wherein said performance determining engine (4) is further configured to:

- apply said first intermediate stepwise fitting function (301) as a function of said access point parameters (30) such that a first intermediate wireless score (111) is determined from said first intermediate stepwise fitting function (301) and is equal to:

  ◦ a maximum ratio of the throughput to the application rate when said retransmission amount (102) is lower than a first predefined threshold and a sum of said activity level (104) and said contention ratio (103) is lower than a second predefined threshold; or
  ◦ when said retransmission amount (102) is larger than a first predefined threshold and said sum of said activity level (104) and said contention ratio (103) is comprised between a third predefined threshold and a fourth predefined threshold, a product of a first coefficient and a second coefficient at power said sum of said activity level (104) and said contention ratio (103), wherein said first coefficient and said second coefficient are calculated such that a mean square error between said simulated score (200) and said first intermediate wireless score (111) is minimized;

- apply said second intermediate stepwise fitting function (302) as a function of said access point parameters (30) such that a second intermediate wireless score (112) is determined from said second intermediate stepwise fitting function (302) and is equal to a ratio of an exponential of a product of the opposite of a third coefficient and said queue length (101) to a difference between a fourth coefficient and said retransmission amount (102), wherein said third coefficient and said fourth coefficient are calculated such that a mean square error between said simulated score (200) and said second intermediate wireless score (112) is minimized;

and wherein said performance determining engine (4) is further configured to determine said wireless score (100) as equal to:

- a maximum ratio of the throughput to the application rate when said retransmission amount (102) is lower than a first predefined threshold and said sum of said activity level (104) and said contention ratio (103) is lower than a second predefined threshold; or
- when said retransmission amount (102) is larger than a first predefined threshold and said sum of said activity level (104) and said contention ratio (103) is comprised between a third predefined threshold and a fourth predefined threshold, a maximum between said second intermediate wireless score (112) and said product of said first coefficient and said second coefficient at power said sum of said activity level (104) and said contention ratio (103); or
- said second intermediate wireless score (112).

**9.** A system (1) according to claim 1, wherein said wireless score (100) is comprised between 0 and 1.

**10.** A method for evaluating performance of a wireless access point (10) in a network (20), said method comprising the steps of:

- determining relation functions (200) for a simulated wireless access point (11) similar to said wireless access point (10), said relation functions (200) modelling a mathematical relation between simulation access point parameters (31) of said simulated wireless access point (11) and a ratio of a simulated throughput delivered by said simulated wireless access point (11) to a simulated application rate demanded by a user of said simulated wireless access point (11);
- remotely determining access point parameters (30) of said wireless access point (10) in said network (20); and
- applying said relation functions (200) to determine from said access point parameters (30) a wireless score (100) representative of said performance of said wireless access point (10), said wireless score corresponding to a ratio of a throughput delivered by said wireless access point (10) to an application rate demanded by a user of said wireless access point (10).

**11.** A computer program comprising software code adapted to perform the method according to claim 10, when said computer program is run on a computer.

12. A computer readable storage medium comprising computer-executable instructions which, when executed by a computing system, perform a method according to claim 10.


**Patentansprüche**

1. System (1) zum Beurteilen einer Leistung eines drahtlosen Zugangspunkts (10) in einem Netzwerk (20), wobei das System (1) Folgendes umfasst:

   - eine simulierte Bewertungsbestimmungseinheit (2), die dazu ausgelegt ist, Beziehungsfunktionen (200) für einen simulierten drahtlosen Zugangspunkt (11), der dem drahtlosen Zugangspunkt (10) ähnlich ist, zu bestimmen, wobei die Beziehungsfunktionen (200) eine mathematische Beziehung zwischen Simulationszugangspunktparametern (31) des simulierten drahtlosen Zugangspunkts (11) und ein Verhältnis zwischen einem simulierten Durchsatz, der vom simulierten drahtlosen Zugangspunkt (11) geliefert wird, und einer simulierten Anwendungsrate, die von einem Benutzer des simulierten drahtlosen Zugangspunkts (11) verlangt wird, modelliert;
   - eine Zugangspunktparametersammeleinheit (3), die angepasst ist, Zugangspunktparameter (30) des drahtlosen Zugangspunkts (10) im Netzwerk (20) aus der Ferne zu bestimmen; und
   - eine Leistungsbestimmungsmaschine (4), die dazu ausgelegt ist, die Beziehungsfunktionen (200) anzuwenden, um anhand der Zugangspunktparameter (30) eine Drahtlosbewertung (100), die für die Leistung des drahtlosen Zugangspunkts (10) repräsentativ ist, zu bestimmen, wobei die Drahtlosbewertung einem Verhältnis zwischen einem Durchsatz, der vom drahtlosen Zugangspunkt (10) geliefert wird, und einer Anwendungsrate, die von einem Benutzer des drahtlosen Zugangspunkts (10) verlangt wird, entspricht.

2. System (1) nach Anspruch 1, wobei die Zugangspunktparametersammeleinheit (3) Folgendes umfasst:

   - ein Warteschlangenlängenbestimmungsmodul (5), das angepasst ist, eine Warteschlangenlänge (101) zu bestimmen, die einer Anzahl von nicht übertragenen Datenpaketen, die am drahtlosen Zugangspunkt (10) verfügbar sind, entspricht;
   - ein Neuübertragungsbestimmungsmodul (6), das angepasst ist, eine Neuübertragungsmenge (102) zu bestimmen, die einem Verhältnis zwischen einer Anzahl von durch den drahtlosen Zugangspunkt (10) innerhalb eines vordefinierten Zeitintervalls neu übertragenen Datenpaketen und einer Anzahl von durch den drahtlosen Zugangspunkt (10) innerhalb des vordefinierten Zeitintervalls gesendeten Datenpaketen entspricht;
   - eine Kanalnutzungsbeurteilungseinheit (7), die angepasst ist, ein Wettbewerbsverhältnis (103) zu bestimmen, das einem Belegtzeitanteil des vordefinierten Zeitintervalls entspricht, während dem der drahtlose Zugangspunkt (10) einen Kanal als belegt erfasst; und
   - eine Kanalaktivitätsbeurteilungseinheit (8), die angepasst ist, ein Aktivitätsniveau (104) zu bestimmen, das einem Zeitanteil des vordefinierten Zeitintervalls entspricht, während dem der drahtlose Zugangspunkt (10) Datenpakete überträgt.

3. System (1) nach Anspruch 2, wobei das Warteschlangenlängenbestimmungsmodul (5) angepasst ist, die Warteschlangenlänge (101) durch Berechnen eines Durchschnitts von Zugangskategoriewarteschlangenlängen jeder Zugangskategorie zu bestimmen, wobei jede Zugangskategorie einer Verkehrsklasse entspricht.

4. System (1) nach Anspruch 2, wobei das Aktivitätsniveau (104) einer Kombination von Folgendem entspricht:

   - einer Übertragungsrate und einer Empfangsrate des drahtlosen Zugangspunkts (10);
   - einer Kanalbandbreite am drahtlosen Zugangspunkt (10) und einer RTS-CTS-Auslegung am drahtlosen Zugangspunkt (10) und
   - einer Gesamtanzahl von übertragenen Bytes und einer Gesamtanzahl von empfangenen Bytes am drahtlosen Zugangspunkt (10).

5. System (1) nach Anspruch 2, wobei die simulierte Bewertungsbestimmungseinheit (2) ferner zu Folgendem ausgelegt ist:

   - Bestimmen von Simulationszugangspunktparametern (31) anhand von simulierten Szenarios oder anhand von gesammelten Messungen im Netzwerk (20);
- Simulieren einer Vielzahl von Kombinationen der Simulationszugangspunktparameter (31);
- Bestimmen eines Durchsatzes für jede Kombination der Simulationszugangspunktparameter (31);
- Verwenden von Maschinenlernen, um eine mathematische Beziehung zwischen den Simulationszugangspunktparametern (31) und dem Durchsatz, der vom simulierten drahtlosen Zugangspunkt (11) geliefert wird, zu bestimmen, dadurch Bestimmen der Beziehungsfunktionen (200).

6. System.(1) nach Anspruch 1, wobei die Beziehungsfunktionen (200) trainierte neuronale Netzwerke umfassen und wobei die Leistungsbestimmungsmaschine (4) ein oder mehrere neuronale Netzwerke umfasst, die dazu ausgelegt sind, durch Anwenden der trainierten neuronalen Netzwerke die Drahtlosbewertung (100) zu bestimmen.

7. System (1) nach Anspruch 2, wobei die Beziehungsfunktionen (200) eine erste schrittweise Zwischenangleichungsfunktion (301) und eine zweite schrittweise Zwischenangleichungsfunktion (302) umfassen und wobei die Leistungsbestimmungsmaschine (4) dazu ausgelegt ist, die Drahtlosbewertung (100) durch Anwenden der ersten schrittweisen Zwischenangleichungsfunktion (301) und der zweiten schrittweisen Zwischenangleichungsfunktion (302) zu bestimmen.

8. System (1) aus Anspruch 7, wobei die Leistungsbestimmungsmaschine (4) ferner zu Folgendem ausgelegt ist:

- Anwenden der ersten schrittweisen Zwischenangleichungsfunktion (301) als eine Funktion der Zugangspunktparameter (30), derart, dass eine erste Drahtloszwischenbewertung (111) anhand der ersten schrittweisen Zwischenangleichungsfunktion (301) bestimmt wird und mit Folgendem gleich ist:

◦ einem maximalen Verhältnis zwischen dem Durchsatz und der Anwendungsrate, wenn die Neuübertragungsmenge (102) kleiner ist als ein erster vordefinierter Schwellwert und eine Summe aus dem Aktivitätsniveau (104) und dem Wettbewerbsverhältnis (103) kleiner ist als ein zweiter vordefinierter Schwellwert; oder
◦ wenn die Neuübertragungsmenge (102) größer als ein erster vordefinierter Schwellwert ist und die Summe aus dem Aktivitätsniveau (104) und dem Wettbewerbsverhältnis (103) zwischen einem dritten vordefinierten Schwellwert und einem vierten vordefinierten Schwellwert umfasst ist, einem Produkt aus einem ersten Koeffizienten und einem zweiten Koeffizienten hoch der Summe aus dem Aktivitätsniveau (104) und dem Wettbewerbsverhältnis (103), wobei der erste Koeffizient und der zweite Koeffizient derart berechnet werden, dass eine mittlere quadratische Abweichung zwischen der simulierten Bewertung (200) und der ersten Drahtloszwischenbewertung (111) minimiert ist;

- Anwenden der zweiten schrittweisen Zwischenangleichungsfunktion (302) als eine Funktion der Zugangspunktparameter (30), derart, dass eine zweite Drahtloszwischenbewertung (112) anhand der zweiten schrittweisen Zwischenangleichungsfunktion (302) bestimmt wird und mit einem Verhältnis zwischen einem Exponenten eines Produkts aus der Gegenzahl eines dritten Koeffizienten und der Warteschlangenlänge (101) und einer Differenz zwischen einem vierten Koeffizienten und der Neuübertragungsmenge (102) gleich ist, wobei der dritte Koeffizient und der vierte Koeffizient derart berechnet werden, dass eine mittlere quadratische Abweichung zwischen der simulierten Bewertung (200) und der zweiten Drahtloszwischenbewertung (112) minimiert ist;

und wobei die Leistungsbestimmungsmaschine (4) ferner dazu ausgelegt ist, die Drahtlosbewertung (100) als mit Folgendem gleich zu bestimmen:

- einem maximalen Verhältnis zwischen dem Durchsatz und der Anwendungsrate, wenn die Neuübertragungsmenge (102) kleiner ist als ein erster vordefinierter Schwellwert und die Summe aus dem Aktivitätsniveau (104) und dem Wettbewerbsverhältnis (103) kleiner ist als ein zweiter vordefinierter Schwellwert; oder
- wenn die Neuübertragungsmenge (102) größer als ein erster vordefinierter Schwellwert ist und die Summe aus dem Aktivitätsniveau (104) und dem Wettbewerbsverhältnis (103) zwischen einem dritten vordefinierten Schwellwert und einem vierten vordefinierten Schwellwert umfasst ist, einem Maximum zwischen der zweiten Drahtloszwischenbewertung (112) und dem Produkt aus dem ersten Koeffizienten und dem zweiten Koeffizienten hoch der Summe aus dem Aktivitätsniveau (104) und dem Wettbewerbsverhältnis (103) oder
- der zweiten Drahtloszwischenbewertung (112).

9. System (1) nach Anspruch 1, wobei die Drahtlosbewertung (100) zwischen 0 und 1 umfasst ist.

**10.** Verfahren zum Beurteilen einer Leistung eines drahtlosen Zugangspunkts (10) in einem Netzwerk (20), wobei das Verfahren die folgenden Schritte umfasst:

- Bestimmen von Beziehungsfunktionen (200) für einen simulierten drahtlosen Zugangspunkt (11), der dem drahtlosen Zugangspunkt (10) ähnlich ist, wobei die Beziehungsfunktionen (200) eine mathematische Beziehung zwischen Simulationszugangspunktparametern (31) des simulierten drahtlosen Zugangspunkts (11) und ein Verhältnis zwischen einem simulierten Durchsatz, der vom simulierten drahtlosen Zugangspunkt (11) geliefert wird, und einer simulierten Anwendungsrate, die von einem Benutzer des simulierten drahtlosen Zugangspunkts (11) verlangt wird, modelliert;
- Bestimmen von Zugangspunktparametern (30) des drahtlosen Zugangspunkts (10) im Netzwerk (20) aus der Ferne und
- Anwenden der Beziehungsfunktionen (200), um anhand der Zugangspunktparameter (30) eine Drahtlosbewertung (100), die für die Leistung des drahtlosen Zugangspunkts (10) repräsentativ ist, zu bestimmen, wobei die Drahtlosbewertung einem Verhältnis zwischen einem Durchsatz, der vom drahtlosen Zugangspunkt (10) geliefert wird, und einer Anwendungsrate, die von einem Benutzer des drahtlosen Zugangspunkts (10) verlangt wird, entspricht.

**11.** Computerprogramm, das Softwarecode umfasst, der angepasst ist, das Verfahren nach Anspruch 10 durchzuführen, wenn das Computerprogramm auf einem Computer läuft.

**12.** Computerlesbares Speichermedium, das computerausführbare Anweisungen umfasst, die, wenn sie von einem Datenverarbeitungssystem ausgeführt werden, ein Verfahren nach Anspruch 10 durchführen.

**Revendications**

**1.** Système (1) permettant d'évaluer les performances d'un point d'accès sans fil (10) dans un réseau (20), ledit système (1) comprenant :

- une unité de détermination de score simulé (2) configurée pour déterminer des fonctions de relation (200) pour un point d'accès sans fil simulé (11) similaire au dit point d'accès sans fil (10), lesdites fonctions de relation (200) modélisant une relation mathématique entre des paramètres de point d'accès de simulation (31) dudit point d'accès sans fil simulé (11) et un rapport entre un débit simulé délivré par ledit point d'accès sans fil simulé (11) et un taux d'application simulé demandé par un utilisateur dudit point d'accès sans fil simulé (11) ;
- une unité de collecte de paramètres de point d'accès (3) conçue pour déterminer à distance des paramètres de point d'accès (30) dudit point d'accès sans fil (10) dans ledit réseau (20) ; et
- un moteur de détermination de performances (4) configuré pour appliquer lesdites fonctions de relation (200) pour déterminer à partir desdits paramètres de point d'accès (30) un score sans fil (100) représentatif desdites performances dudit point d'accès sans fil (10), ledit score sans fil correspondant à un rapport entre un débit délivré par ledit point d'accès sans fil (10) et un taux d'application demandé par un utilisateur dudit point d'accès sans fil (10).

**2.** Système (1) selon la revendication 1, dans lequel ladite unité de collecte de paramètres de point d'accès (3) comprend :

- un module de détermination de longueur de file d'attente (5) conçu pour déterminer une longueur de file d'attente (101) correspondant à un nombre de paquets de données non transmis disponibles au niveau dudit point d'accès sans fil (10) ;
- un module de détermination de retransmission (6) conçu pour déterminer une quantité de retransmission (102) correspondant à un rapport entre un nombre de paquets de données retransmis par ledit point d'accès sans fil (10) dans un intervalle de temps prédéfini et un nombre de paquets de données envoyés par ledit point d'accès sans fil (10) dans ledit intervalle de temps prédéfini ;
- une unité d'évaluation d'utilisation de canal (7) conçue pour déterminer un taux de contention (103) correspondant à une fraction de temps occupé dudit intervalle de temps prédéfini durant laquelle ledit point d'accès sans fil (10) détecte un canal comme étant occupé ; et
- une unité d'évaluation d'activité de canal (8) conçue pour déterminer un niveau d'activité (104) correspondant à une fraction de temps dudit intervalle de temps prédéfini durant laquelle ledit point d'accès sans fil (10) transmet des paquets de données.

**3.** Système (1) selon la revendication 2, dans lequel ledit module de détermination de longueur de file d'attente (5) est conçu pour déterminer ladite longueur de file d'attente (101) en calculant une moyenne de longueurs de file d'attente de catégorie d'accès de chaque catégorie d'accès, ladite chaque catégorie d'accès correspondant à une classe de trafic.

**4.** Système (1) selon la revendication 2, dans lequel ledit niveau d'activité (104) correspond à une combinaison d'éléments suivants :

- un taux de transmission et un taux de réception dudit point d'accès sans fil (10) ;
- une bande passante de canal au niveau dudit point d'accès sans fil (10) et une configuration RTS-CTS au niveau dudit point d'accès sans fil (10) ; et
- un nombre total d'octets transmis et un nombre total d'octets reçus au niveau dudit point d'accès sans fil (10).

**5.** Système (1) selon la revendication 2, dans lequel ladite unité de détermination de score simulé (2) est en outre configurée pour :

- la détermination de paramètres de point d'accès de simulation (31) à partir de scénarios simulés ou à partir de mesures collectées dans ledit réseau (20) ;
- la simulation d'une pluralité de combinaisons desdits paramètres de point d'accès de simulation (31) ;
- la détermination d'un débit pour chaque combinaison desdits paramètres de point d'accès de simulation (31) ;
- l'utilisation d'un apprentissage machine pour déterminer une relation mathématique entre lesdits paramètres de point d'accès de simulation (31) et ledit débit délivré par ledit point d'accès sans fil simulé (11), déterminant ainsi lesdites fonctions de relation (200) .

**6.** Système (1) selon la revendication 1, dans lequel lesdites fonctions de relation (200) comprennent des réseaux de neurones instruits et ledit moteur de détermination de performances (4) comportant un ou plusieurs réseaux de neurones configurés pour déterminer ledit score sans fil (100) en appliquant lesdits réseaux de neurones instruits.

**7.** Système (1) selon la revendication 2, dans lequel des fonctions de relation (200) comprennent une première fonction d'ajustement progressif intermédiaire (301) et une deuxième fonction d'ajustement progressif intermédiaire (302) et ledit moteur de détermination de performances (4) étant configuré pour déterminer ledit score sans fil (100) en appliquant ladite première fonction d'ajustement progressif intermédiaire (301) et ladite deuxième fonction d'ajustement progressif intermédiaire (302).

**8.** Système (1) selon la revendication 7, dans lequel ledit moteur de détermination de performances (4) est en outre configuré pour :

- l'application de ladite première fonction d'ajustement progressif intermédiaire (301) comme une fonction desdits paramètres de point d'accès (30) afin qu'un premier score sans fil intermédiaire (111) soit déterminé à partir de ladite première fonction d'ajustement progressif intermédiaire (301) et soit égal à :

    • un rapport maximum entre le débit et le taux d'application lorsque ladite quantité de retransmission (102) est inférieure à un premier seuil prédéfini et qu'une somme dudit niveau d'activité (104) et dudit taux de contention (103) est inférieure à un deuxième seuil prédéfini ; ou
    • lorsque ladite quantité de retransmission (102) est supérieure à un premier seuil prédéfini et que ladite somme dudit niveau d'activité (104) et dudit taux de contention (103) est comprise entre un troisième seuil prédéfini et un quatrième seuil prédéfini, un produit d'un premier coefficient et d'un deuxième coefficient à la puissance de ladite somme dudit niveau d'activité (104) et dudit taux de contention (103), ledit premier coefficient et ledit deuxième coefficient étant calculés de sorte qu'une erreur quadratique moyenne entre ledit score simulé (200) et ledit premier score sans fil intermédiaire (111) soit minimisée ;

- l'application de ladite deuxième fonction d'ajustement progressif intermédiaire (302) comme une fonction desdits paramètres de point d'accès (30) afin qu'un deuxième score sans fil intermédiaire (112) soit déterminé à partir de ladite deuxième fonction d'ajustement progressif intermédiaire (302) et soit égal à un rapport entre un exponentiel d'un produit de l'opposé d'un troisième coefficient et de ladite longueur de file d'attente (101) et une différence entre un quatrième coefficient et ladite quantité de retransmission (102), ledit troisième coefficient et ledit quatrième coefficient étant calculés de sorte qu'une erreur quadratique moyenne entre ledit score simulé (200) et ledit deuxième score sans fil intermédiaire (112) soit minimisée ;

ledit moteur de détermination de performances (4) étant en outre configuré pour déterminer ledit score sans fil (100) comme étant égal à :

- un rapport maximum entre le débit et le taux d'application lorsque ladite quantité de retransmission (102) est inférieure à un premier seuil prédéfini et que ladite somme dudit niveau d'activité (104) et dudit taux de contention (103) est inférieure à un deuxième seuil prédéfini ; ou
- lorsque ladite quantité de retransmission (102) est supérieure à un premier seuil prédéfini et que ladite somme dudit niveau d'activité (104) et dudit taux de contention (103) est comprise entre un troisième seuil prédéfini et un quatrième seuil prédéfini, un maximum entre ledit deuxième score sans fil intermédiaire (112) et ledit produit dudit premier coefficient et dudit deuxième coefficient à la puissance de ladite somme dudit niveau d'activité (104) et dudit taux de contention (103) ; ou
- au dit deuxième score sans fil intermédiaire (112) .

9. Système (1) selon la revendication 1, dans lequel ledit score sans fil (100) est compris entre 0 et 1.

10. Procédé permettant d'évaluer les performances d'un point d'accès sans fil (10) dans un réseau (20), ledit procédé comprenant les étapes suivantes :

- la détermination de fonctions de relation (200) pour un point d'accès sans fil simulé (11) similaire au dit point d'accès sans fil (10), lesdites fonctions de relation (200) modélisant une relation mathématique entre des paramètres de point d'accès de simulation (31) dudit point d'accès sans fil simulé (11) et un rapport entre un débit simulé délivré par ledit point d'accès sans fil simulé (11) et un taux d'application simulé demandé par un utilisateur dudit point d'accès sans fil simulé (11) ;
- la détermination à distance des paramètres de point d'accès (30) dudit point d'accès sans fil (10) dans ledit réseau (20) ; et
- l'application desdites fonctions de relation (200) pour déterminer à partir desdits paramètres de point d'accès (30) un score sans fil (100) représentatif desdites performances dudit point d'accès sans fil (10), ledit score sans fil correspondant à un rapport entre un débit délivré par ledit point d'accès sans fil (10) et un taux d'application demandé par un utilisateur dudit point d'accès sans fil (10).

11. Programme informatique comprenant un code logiciel conçu pour mettre en oeuvre le procédé selon la revendication 10, lorsque ledit programme informatique est exécuté sur un ordinateur.

12. Support de stockage lisible par ordinateur comprenant des instructions exécutables par ordinateur qui, lorsqu'elles sont exécutées par un système informatique, mettent en oeuvre un procédé selon la revendication 10.

Fig. 1

Fig. 2

EP 3 337 220 B1

Fig. 3A

Fig. 3B

Fig. 3C

EP 3 337 220 B1

Fig. 4A

Fig. 4B

Fig. 4C

EP 3 337 220 B1

Fig. 5A

| | MCS Index 501 | RD 502 | RD' (No RTS/CTS) 503 |
|---|---|---|---|
| | 0 | 6.5 | 5.5 |
| | 1 | 13 | 10.85 |
| | 2 | 19.5 | 14.8 |
| | 3 | 26 | 18.29 |

Fig. 5B

Fig. 5C

Fig. 6

504 — | Determining relation functions 200
for a simulated wireless access point 11 |

505 — | Remotely determining access point parameters 30
of a wireless access point 10 of a network 20 |

506 — | Applying the relation functions 200
to determine from said access point parameters 30
a wireless score 100 corresponding to a ratio of
a throughput to an application rate and
representative of performance of
said wireless access point 10 |

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2947910 A2

**Non-patent literature cited in the description**

- **A. VLAVIANOS et al.** Assessing link quality in IEEE 802.11 wireless networks: what is the right metric?. *proceedings of the IEEE PIMCR,* December 2008
- **K. H. KIM et al.** WiSlow: a Wi-Fi network performance troubleshooting tool for end users. *the proceedings of the IEEE INFOCOM,* July 2008
- Wireless LAN Medium Access Control (MAC) and Physical Layer (PHY) Specifications. TR181. IEEE, 2012
- Wireless LAN Medium Access Control (MAC) and Physical Layer (PHY) Specifications. IEEE, 2012
- **JAMES A. ANDERSON.** *An Introduction to Neural Networks,* March 1995